# EUROPÄISCHE PATENTSCHRIFT

(11) **EP 1 264 085 B1**
(45) Veröffentlichungstag und Bekanntmachung des Hinweises auf die Patenterteilung: **04.01.2006**
(21) Anmeldenummer: 01915208.1
(22) Anmeldetag: 08.02.2001
(51) Int. Cl.: F01N 7/18, B60K 13/04

(54) **AUFHÄNGEVORRICHTUNG FÜR EINE SCHWINGENDE LAST, INSBES. FÜR EINE ABGASANLAGE EINES KRAFTFAHRZEUGS**
SUSPENSION FOR AN OSCILLATING LOAD, ESPECIALLY FOR THE EXHAUST SYSTEM OF A MOTOR VEHICLE
DISPOSITIF DE SUSPENSION POUR UNE CHARGE OSCILLANTE, EN PARTICULIER POUR UN SYSTEME D'ECHAPPEMENT DE VEHICULE

(30) Priorität: 17.03.2000 DE 10013121
(43) Veröffentlichungstag der Anmeldung: 11.12.2002
(73) Patentinhaber: SGF SÜDDEUTSCHE GELENKSCHEIBENFABRIK GMBH & CO. KG., 84478 Waldkraiburg (DE)
(72) Erfinder: STEINMAIER, Klaus, 84478 Waldkraiburg (DE)
(74) Vertreter: Goetz, Rupert
(86) Internationale Anmeldenummer: PCT/EP2001/001363
(87) Internationale Veröffentlichungsnummer: WO 2001/069054

(56) Entgegenhaltungen:
- EP-A- 0 529 250
- DE-A- 2 658 358
- DE-A- 3 737 987
- DE-A- 19 748 824
- DE-A- 19 831 114
- DE-C- 19 812 347
- US-A- 4 660 797

## Beschreibung

Die Erfindung betrifft eine Aufhängevorrichtung nach dem Oberbegriff des Anspruchs 1.

Eine bekannte Aufhängevorrichtung dieser Gattung (DE 198 12 347 C1) hat die äußere Form einer Raute, die von einem oben angeordneten Tragbalken mit zwei nach unten abgewinkelten Tragschenkeln und von einem unten angeordneten Lastbalken mit zwei nach oben abgewinkelten Lastschenkeln gebildet ist. Die vier Ecken der Raute sind abgerundet; im Bereich der oberen Ecke ist im Tragbalken ein Kraftangriffszentrum ausgebildet, während im Bereich der unteren Ecke im Lastbalken ein Lastverteilzentrum ausgebildet ist und an den beiden übrigen, in einer gemeinsamen Transversalebene angeordneten Ecken je einer der Tragschenkel mit je einem der Lastsschenkel gelenkig verbunden ist. Wird diese bekannte Aufhängevorrichtung in der vorgesehenen Weise mit einander entgegengerichteten, am Kraftangriffszentrum bzw. am Lastverteilzentrum angreifenden Kräften belastet, so entfernen sich diese beiden Zentren nicht nur von einander sondern beide auch von der Transversalebene, in der die beiden Gelenke liegen. In Folge dessen nimmt die schon im unbelasteten Zustand erhebliche Bauhöhe der bekannten Aufhängevorrichtung bei Belastung von Anfang an zu. Die Federcharakteristik ist unvermeidbar progressiv und eignet sich deshalb besonders für starke Stoßbeanspruchungen, wie sie z.B. bei Geländefahrzeugen auftreten.

Der Erfindung liegt die Aufgabe zu Grunde, eine Aufhängevorrichtung für eine schwingende Last, insbes. für eine Abgasanlage eines Kraftfahrzeugs, derart zu gestalten, daß sie bei gleicher maximaler Belastbarkeit und gleichem maximalen Federweg eine geringere Bauhöhe beansprucht.

Die Aufgabe ist erfindungsgemäß mit den Merkmalen des Anspruchs 1 gelöst. Vorteilhafte Weiterbildungen ergeben sich aus den Unteransprüchen.

Ausführungsbeispiele der Erfindung werden im folgenden anhand schematischer Zeichnungen mit weiteren Einzelheiten erläutert; darin ist:
- Fig. 1: ein senkrechter Schnitt einer ersten Aufhängevorrichtung in unbelastetem Zustand;
- Fig. 2: dieselbe Aufhängevorrichtung, deren rechte Hälfte unbelastet, und deren linken Hälfte in einer Lage dargestellt ist, die sich bei einer angenommenen statischen Belastung ergibt;
- Fig. 3: dieselbe Aufhängevorrichtung, deren rechte Hälfte wiederum in unbelastetem Zustand, deren linke Hälfte jedoch in einer Lage dargestellt ist, die sich bei einer dynamischen Zusatzbelastung ergibt;
- Fig. 4: einen stark vergrößerten Ausschnitt aus der rechten Hälfte der Fig.1;
- Fig. 5: einen der Fig.1 entsprechenden senkrechten Schnitt durch eine zweite, in Einzelheiten ergänzte Aufhängevorrichtung;
- Fig. 6: den zur Schnittebene der Fig.5 normalen, ebenfalls senkrechten Schnitt in der Ebene A der Fig.5;
- Fig. 7: ein Einzelteil aus Fig.5, etwas vergrößert;
- Fig. 8: dasselbe Einzelteil, in Richtung des Pfeils VIII in Fig.7 betrachtet;
- Fig. 9: eine dritte Aufhängevorrichtung in einem senkrechten Schnitt;
- Fig. 10: den zur Zeichnungsebene der Fig.9 normalen, ebenfalls senkrechten Schnitt in der Ebene A der Fig.9;
- Fig. 11: eine vierte Aufhängevorrichtung in einem senkrechten Schnitt;
- Fig. 12: den zur Zeichnungsebene der Fig.11 normalen, ebenfalls senkrechten Schnitt in der Ebene A der Fig.11;
- Fig. 13: eine fünfte Aufhängevorrichtung in einem senkrechten Schnitt;
- Fig. 14: eine sechste Aufhängevorrichtung, ebenfalls in einem senkrechten Schnitt;
- Fig. 15: eine siebte Aufhängevorrichtung, in einem senkrechten Schnitt;
- Fig. 16: eine achte Aufhängevorrichtung in einem senkrechten Schnitt;
- Fig. 17: den zur Zeichnungsebene der Fig.16 normalen, ebenfalls senkrechten Schnitt in der Ebene A der Fig.16.

Jede der dargestellten Aufhängevorrichtungen ist zum Aufhängen einer Abgasanlage an einem Kraftfahrzeug vorgesehen und ist symmetrisch in Bezug auf eine senkrechte Symmetrieebene A gestaltet, die sich in Einbaulage quer zu der mit einem Doppelpfeil X angedeuteten Längsrichtung des Kraftfahrzeugs erstreckt. Die Symmetrieebene A ist somit parallel zur Fahrzeugquerachse Y und zur Fahrzeughochachse Z. In der Symmetrieebene A wirken die von der aufgehängten Last L stammenden statischen und dynamischen Kräfte sowie die resultierende Reaktionskraft R.

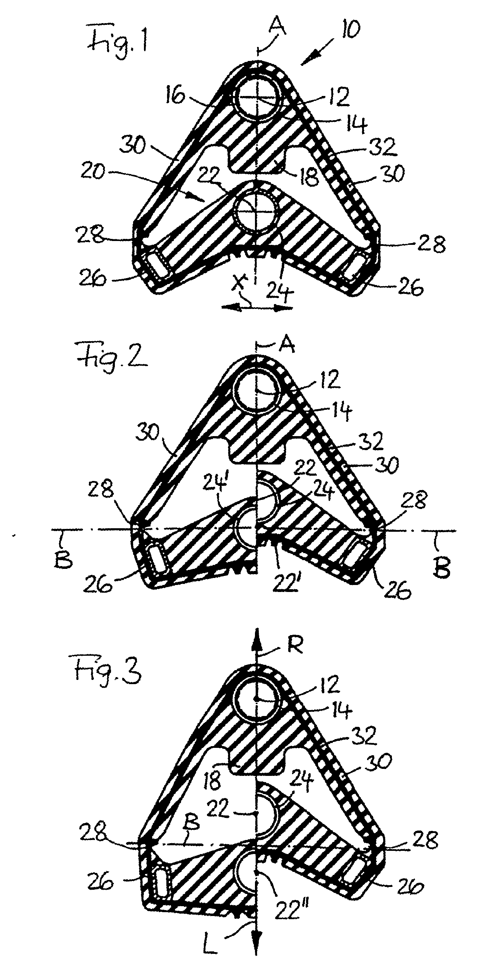

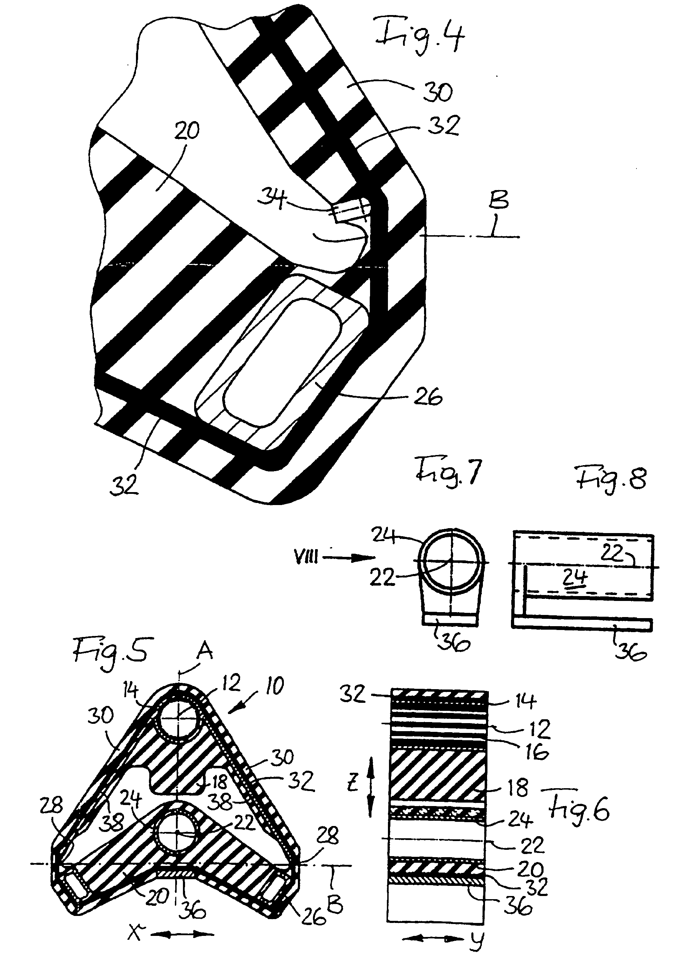

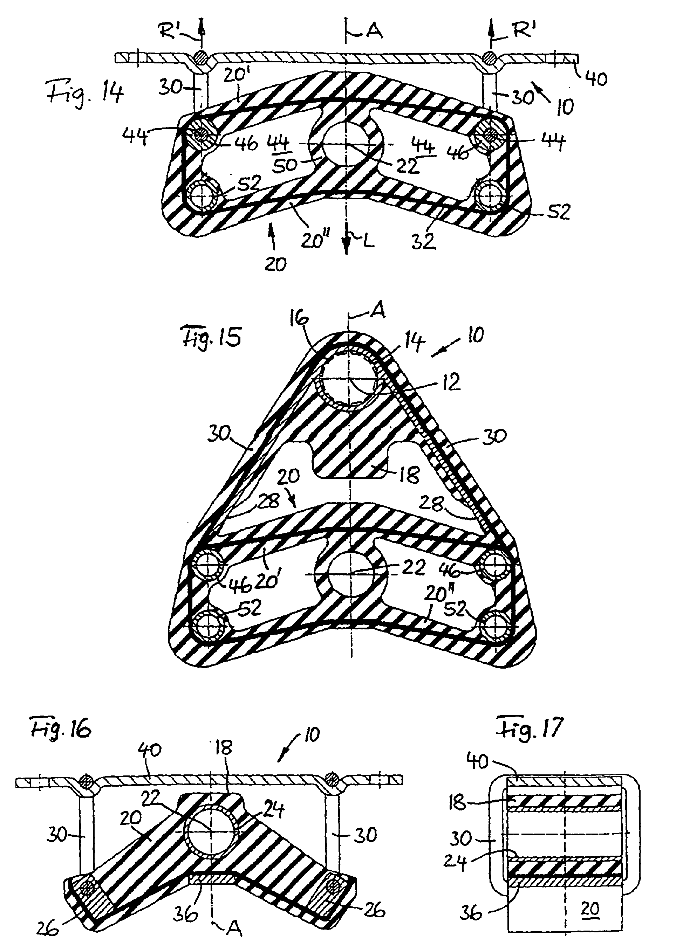

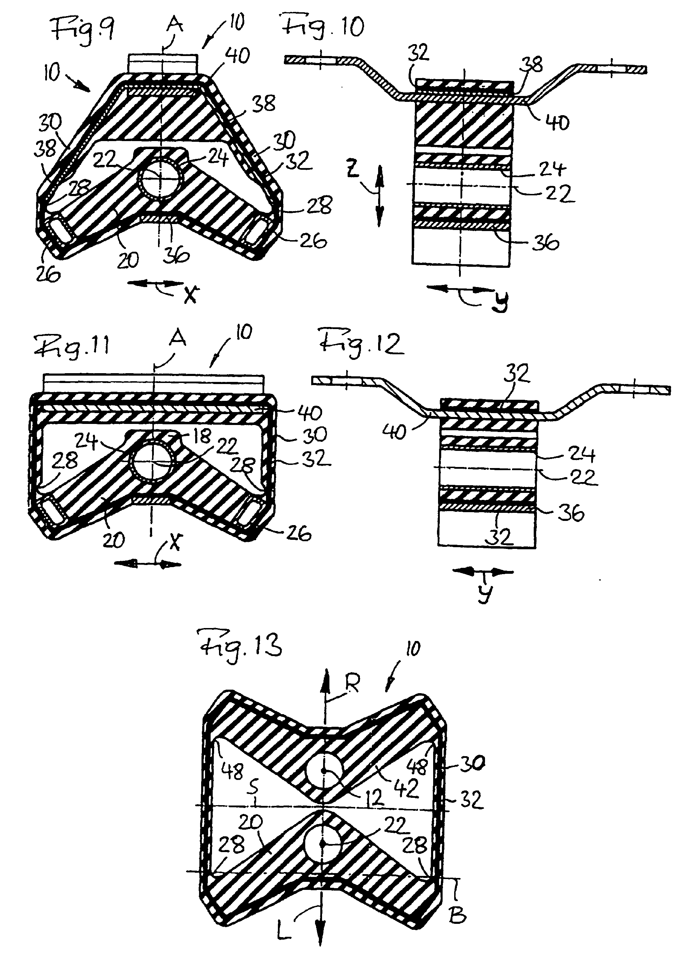

Die in Fig.1 bis 4 dargestellte Aufhängevorrichtung hat, in Richtung der Fahrzeugquerachse Y betrachtet, in unbelastetem Zustand gemäß Fig.1 eine Umrissform, die einem gleichseitigen Dreieck ähnelt, dessen Basis jedoch nach oben eingeknickt oder, mit anderen Worten, pfeilförmig abgewinkelt ist. Die obere Ecke dieses Dreiecks ist abgerundet und als Tragbereich 10 ausgebildet, der ein virtuelles Kraftangriffszentrum 12 aufweist. In Fig.1 bis 3 (wie auch in Fig.5 und 6 sowie in Fig.15) ist das Kraftangriffszentrum 12 die Achse einer in den Tragbereich 10 eingebetteten, vorzugsweise einvulkanisierten zylindrischen Büchse 14 aus Metall oder steifem Kunststoff, die an ihrer Innenseite eine Auskleidung 16 aus gleitfähigem Gummi oder Kunststoff aufweist. Die Büchse 14 läßt sich beispielsweise auf einen Bolzen aufstecken, der an einer Bodenplatte eines Kraftfahrzeugs befestigt ist. Ersatzweise kann ein solcher Bolzen unmittelbar in einem zylindrischen Loch im Tragbereich 10 aufgenommen werden. Der Tragbereich 10 kann, wie unter anderem in Fig.1 bis 3 dargestellt, nach unten durch einen Puffer 18 verlängert sein.

Unterhalb des Tragbereichs 10 ist ein Lastbalken 20 angeordnet, der in seiner Mitte ein virtuelles Lastverteilzentrum 22 aufweist. Dieses ist, wie in Fig.1 bis 12, 16 und 17 dargestellt, von der geometrischen Achse einer in den Lastbalken 20 eingebetteten, vorzugsweise einvulkanisierten zylindrischen Büchse 24 oder gemäß Fig. 13 und 14 von der geometrischen Achse eines zylindrischen Lochs gebildet. In die Büchse 24 bzw. unmittelbar in das Loch im Lastbalken 20 läßt sich ein nicht dargestellter Bolzen oder dergleichen stecken, der an der Abgasanlage oder sonstigen aufzuhängenden Last L befestigt ist. In diesem Fall ist das Lastverteilzentrum 22 zugleich Lastangriffszentrum. Der Lastbalken 20 kann aber auch ohne Loch und ohne Büchse 24 ausgeführt und mit der aufzuhängenden Last z.B. durch einen mittig angeordneten Überwurfbügel verbunden sein.

Vom Lastverteilzentrum 22 aus ist der Lastbalken 20 derart abgewinkelt, daß er die Form eines nach oben weisenden Pfeils hat; der Lastbalken 20 ist mit anderen Worten umgekehrt V-förmig. An seinen beiden Enden ist je ein rohrförmiger Stützkörper 26 aus Metall öder steifem Kunststoff angeordnet, vorzugsweise einvulkanisiert. An die rohrförmigen Stützkörper 26 angrenzend ist je eine Gelenkzone 28 ausgebildet, gemäß Fig.1 bis 4, wie auch bei weiteren dargestellten Beispielen dadurch, daß der Lastbalken 20 mit abrupter Steifigkeitsminderung in einen Tragschenkel 30 übergeht, der ihn mit dem Tragbereich 10 verbindet. Alternativ sind die Gelenkzonen 28 beispielsweise gemäß Fig.16 an den Stützkörpern 26 selbst ausgebildet, indem diese als Scharnierteile gestaltet sind.

Der Tragbereich 10, die Tragschenkel 30 und der Lastbalken 20 sind einstückig aus Gummi oder gummiartigem Werkstoff vulkanisiert oder gegossen und enthalten eine Einlage 32, die biegeweich, jedoch im wesentlichen zugstarr ist, sich bei Zugbelastung also nicht nennenswert, und jedenfalls weniger dehnt als der Gummi oder gummiartige Werkstoff, in den die Einlage 32 eingebettet ist. Vorzugsweise besteht die Einlage 32 aus einer Faden- oder Drahtwicklung oder aus einem Textilgewebe oder Drahtgeflecht. Gewöhnlich wird die Einlage 32, wie dargestellt, beim Einbetten in den Gummi oder gummiartigen Werkstoff zumindest bis zum Abschluß von dessen Vulkanisation bzw. Verfestigung straff gehalten, vorzugsweise durch die insoweit als Stützkörper dienende Büchse 14, die beiden rohrförmigen Stützkörper 26 sowie je einen leistenförmigen Stützkörper 34 (Fig.4) in den beiden Gelenkzonen 28. Zusätzlich kann zum Straffhalten der Einlage 32 in deren konkavem Bereich unterhalb des Lastverteilzentrums 22 ein plattenförmiger Stützkörper 36 vorgesehen sein, der gemäß Fig.5 bis 12 und 16 mit der Büchse 24 in einem Stück hergestellt, beispielsweise aus Metall oder Kunststoff gespritzt sein kann.

Der Tragbereich 10 und die Tragschenkel 30 können auch aus starrem Material z.B. aus Metall, gefertigt sein; die Verbindungen zwischen den Tragschenkeln 30 und dem Lastbalken 20 müssen jedoch gelenkig bleiben.

Bei einzelnen Ausführungsformen der Erfindung können die Stützkörper 26, 34 und 36 ersatzlos entfallen, wie aus Fig.13 ersichtlich ist.

Bei der z.B. in Fig.1 bis 4 dargestellten Ausführung der Gelenkzonen 28 ist zu beachten, daß die Einlage 32 in den die Gelenkzone 28 bildenden Bereichen, gemäß Fig. 1 bis 4 unmittelbar unterhalb der leistenförmigen Stützkörper 34, nur mit einer so dünnen Gummi- oder Kunststoffschicht bedeckt sind, daß die im Betrieb auftretenden Spannungen, insbes. Zugspannungen, innerhalb zulässiger Grenzen bleiben. Vorzugsweise ist die Schicht so dünn, daß sie zum Schutz gegen Umgebungseinflüsse gerade ausreicht.

Die Aufhängevorrichtung gemäß Fig.5 bis 8 unterscheidet sich von der in Fig.1 bis 4 dargestellten abgesehen vom Vorhandensein des plattenförmigen Stützkörpers 36 auch dadurch, daß in den Tragbereich 10 und in die beiden Tragschenkel 30 eine Blattfeder 38 eingelegt ist, die einen entsprechend dem äußeren Radius der Büchse 14 gekrümmten Scheitelbereich aufweist, mit diesem zwischen der Büchse 14 und der Einlage 32 angeordnet ist und sich innerhalb der beiden Tragschenkel 30 bis zu je einer der Gelenkzonen 28 oder in deren Nähe erstreckt. Diese Blattfeder 38 trägt dazu bei, die Steifigkeit der Aufhängevorrichtung in Richtung der Fahrzeuglängsachse X sowie in Richtung der Fahrzeugquerachse Y zu erhöhen. Grundsätzlich ist es aus akustischen Gründen erwünscht, daß eine Aufhängevorrichtung für eine Abgasanlage eines Kraftfahrzeugs in Richtung aller Achsen (X,Y,Z) eine geringe Steifigkeit aufweist. Mit Rücksicht auf im Fahrbetrieb auftretende Beschleunigungskräfte ist jedoch in einzelnen Fällen eine gezielte Erhöhung der Steifigkeit in Richtung einzelner Achsen notwendig.

Eine erhöhte Steifigkeit in Richtung der Fahrzeuglängsachse X ist beispielsweise dann erwünscht, wenn mittels der Aufhängevorrichtung im vorderen Bereich eines Kraftfahrzeugs eine Abgasanlage aufgehängt werden soll, deren vorderes Ende mit dem zugehörigen Verbrennungsmotor nicht starr sondern zur Schallentkopplung über ein elastisches Zwischenglied verbunden ist. Die von der Blattfeder 38 auch bewirkte Versteifung in Richtung der Fahrzeugquerachse Y ist beispielsweise dann erwünscht, wenn im Heck eines Kraftfahrzeugs eine Abgasanlage aufzuhängen ist, deren Endrohr sich mit geringem Spiel durch eine Aussparung in einer Heckschürze des Kraftfahrzeugs erstreckt.

Die in Fig.1 bis 4 dargestellte Aufhängevorrichtung ohne die Blattfeder 38 kann jedoch beispielsweise dann vorzuziehen sein, wenn es darum geht, im Heck eines Fahrzeugs eine Abgasanlage aufzuhängen, die vorne starr mit dem zugehörigen Verbrennungsmotor verbunden ist; in diesem Fall wird die Aufhängevorrichtung nicht mit Trägheitskräften belastet, die beim Beschleunigen oder Abbremsen des geradeaus fahrenden Fahrzeugs auftreten.

Die in Fig.1 bis 4 bzw. in Fig.5 bis 8 bzw. in Fig.15 dargestellten Aufhängevorrichtungen können an ihrem Kraftangriffszentrum 12 pendelnd gelagert werden, beispielsweise mit Rücksicht auf Wärmedehnungen einer an ihnen aufgehängten Abgasanlage, die an anderer Stelle eines Kraftfahrzeugs gegen Längsbewegungen festgehalten ist.

Im Gegensatz dazu ist die in Fig. 9 und 10 dargestellte Aufhängevorrichtung am Pendeln durch eine in den Tragbereich 10 eingebettete, vorzugsweise einvulkanisierte, Tragplatte 40 gehindert, die sich beispielsweise an einer Bodenplatte eines Kraftfahrzeugs von unten her festschrauben läßt. Unmittelbar auf der Tragplatte 40, zwischen dieser und der Einlage 32, liegt der in diesem Fall ebene mittlere Bereich einer Blattfeder 38, die im übrigen ähnlich wie in Fig.5 und 6 in den Tragbereich 10 und die Schenkel 30 eingebettet, vorzugsweise einvulkanisiert, ist. Die in Fig.9 und 10 dargestellte Aufhängevorrichtung ist also verhältnismäßig steif in Richtung der Fahrzeuglängsachse X sowie in Richtung der Fahrzeugquerachse Y.

Die in Fig.11 und 12 sowie die in Fig.14 und die in Fig.16 und 17 dargestellten Aufhängevorrichtungen sind hingegen in Richtung der Fahrzeuglängsachse X nachgiebig. Gemäß Fig.11 und 12 ist zwar wiederum in den Tragbereich 10 eine Tragplatte 40 eingebettet; diese erstreckt sich jedoch ebenso wie der Tragbereich 10 als Ganzes über nahezu die gesamte in Richtung der Fahrzeuglängsachse X gemessene Länge der Aufhängevorrichtung, und die Tragschenkel 30 erstrecken sich parallel zueinander nach unten, so daß sie wie Parallelogrammlenker wirken und der Lastbalken 20 in Folge dessen in Richtung der Fahrzeuglängsachse X gegen nur geringen Widerstand hin- und her schwingen kann. Auch in Richtung der Fahrzeugquerachse Y ist die in Fig.11 und 12 dargestellte Aufhängevorrichtung verhältnismäßig nachgiebig.

Die in Fig.9 und 10 bzw. in Fig.11 und 12 bzw. in Fig.14 bzw. in Fig.16 und 17 dargestellten Ausführungsbeispiele haben im übrigen den Vorteil, daß all diese Aufhängevorrichtungen sich leicht von unten her an ein Bodenteil eines Kraftfahrzeugs anschrauben lassen und eine solche Schraubmontage sich sogar automatisieren läßt.

Die Aufhängevorrichtung gemäß Fig.13 unterscheidet sich von der in Fig. 11 und 12 dargestellten vor allem dadurch, daß der Tragbereich 10 im wesentlichen von einem V-förmigen Tragbalken 42 gebildet ist, der zum Lastbalken 20 bezüglich einer waagerechten Symmetrieebene S symmetrisch gestaltet und mit den beiden wiederum zueinander parallelen Tragschenkeln 30 durch je eine Gelenkzone 48 verbunden ist. Ebenso wie die Gelenkzonen 28 ergeben sich die Gelenkzonen 48 einfach dadurch, daß die Tragschenkel erheblich weniger biegesteif sind als der Lastbalken 20 und der Tragbalken 42.

Wird die Aufhängevorrichtung gemäß Fig.13 durch eine Last L und entsprechende Reaktionskraft R auf Zug belastet, so verformen sich der Lastbalken 20 und der Tragbalken 42 derart, daß ihre Symmetrie in Bezug auf die Symmetrieebene S erhalten bleibt. Vorzugsweise ist die Aufhängevorrichtung gemäß Fig. 13 so bemessen, daß ihr Lastbalken 20 und ihr Tragbalken 42 bei normaler statischer Belastung, beispielsweise durch das Eigengewicht einer Abgasanlage, ihre Strecklage erreichen, also das Kraftangriffszentrum 12 und die Gelenkzonen 48 in einer gemeinsamen waagrechten oberen Ebene liegen, während das Lastverteilzentrum 22 und die Gelenkzonen 28 in einer gemeinsamen waagrechten unteren Ebene liegen. Unter dem Einfluß dynamischer Zusatzlasten können die beiden Balken 20 und 42 ihre Strecklage mehr oder weniger stark überschreiten. Der gesamte Federweg der in Fig.13 dargestellten Aufhängevorrichtung ist die Summe der Federwege des Lastbalkens 20 und des Tragbalkens 42; funktionell sind die beiden Balken 20 und 42 gemäß Fig.13 also in Reihe geschaltet.

Die in Fig.14 dargestellte Aufhängevorrichtung weist hingegen einen Lastbalken 20 auf, der durch beiderseits des Lastverteilzentrums 22 angeordneten Aussparungen 44 in zwei gleichsinnig abgewinkelte, umgekehrt V-förmige Balken unterteilt ist, nämlich einen oberen, in Bezug auf den Tragbereich 10 proximalen Teil 20' und einen unteren, distalen Teil 20''. Der proximale Teil 20' des Lastbalkens 20 hat im Bereich seiner beiden Enden je eine Gelenkzone, die von je einer eingebetteten Büchse 46 gebildet ist. In den Büchsen ist das abgewinkelte untere Ende je eines Tragschenkels 30 drehbar gelagert. Die Tragschenkel 30 bestehen gemäß Fig.14 (wie auch gemäß Fig.16 und 17) aus Rundstahl und sind oben an einer Tragplatte 40 pendelnd gelagert. Über die beiden Büchsen 46 werden die von der aufgehängten Last L hervorgerufenen Reaktionskräfte R', die sich zu einer resultierenden Reaktionskraft R summieren, an die Tragplatte 40 weitergegeben.

Der mittlere Bereich der Oberseite des Lastbalkens 20 bildet gemäß Fig.14 (wie auch gemäß Fig.16 und 17) einen Anschlag 18, der bei schwingender, also zeitweise negativer, Last L gegen die Tragplatte 40 stoßen kann.

Gemäß Fig.14 sind die beiden Teile 20' und 20" des Lastbalkens 20 miteinander mittig verbunden, im dargestellten Beispiel durch einen mit diesen Teilen einstückig aus Gummi oder gummiähnlichem Werkstoff hergestellten Hohlzylinder 50. Die geometrische Achse dieses Hohlzylinders 50 bildet das Lastverteilzentrum 22. Alternativ kann als mittige Verbindung der beiden Teile 20' und 20'' des Lastbalkens 20 ein in sie eingebetteter, insbes, einvulkanisierter Brückenkörper, beispielsweise aus Kunststoff, vorgesehen sein. Die im wesentlichen zugstarre Einlage 32 umschlingt gemäß Fig.14 die beiden Büchsen 46 sowie zwei weitere Büchsen 52, die in je einen Endbereich des distalen Teils 20" des Lastbalkens 20 eingebettet sind.

Die in Fig.14 dargestellte Gestaltung und Anordnung der beiden Teile 20' und 20" des Lastbalkens 20 entspricht einer Parallelschaltung dieser beiden Teile mit der Folge, daß der Federweg der gesamten Aufhängevorrichtung gleich dem Federweg jedes einzelnen der beiden Teile 20' und 20" ist, während die Federsteifigkeit der Aufhängevorrichtung gleich der Summe der Steifigkeiten der beiden Teile 20' und 20'' ist.

Das in Fig.15 dargestellte Ausführungsbeispiel kombiniert die in Fig.1 bis 4 sowie in Fig.5 und 6 dargestellte Gestaltung des Tragbereichs 10 mit der in Fig.14 dargestellten Unterteilung des Lastbalkens 20 in einen proximalen Teil 20' und einen distalen Teil 20''.

Bei dem in Fig.16 und 17 dargestellten Ausführungsbeispiel sind die Tragschenkel 30 wie in Fig.14 aus Rundstahl hergestellt und pendelnd an einer Tragplatte 40 aufgehängt, die ihrerseits von unten an einer Bodenplatte eines Kraftfahrzeugs zu befestigen, z.B. anzuschrauben ist. Übereinstimmend mit u.a. Fig.1 bis 4 ist der Lastbalken gemäß Fig.16 und 17 ungeteilt. Die Gelenkzonen 28 sind in je einem von zwei Stützkörpern 26 ausgebildet, die in je einem Endbereich des Lastbalkens 20 eingebettet sind.

Sämtliche dargestellten Ausführungsformen erfindungsgemäßer Aufhängevorrichtungen haben neben ihrem geringen Platzbedarf in Z-Richtung den Vorteil, daß ihre Kraft-Weg-Charakteristik in Z-Richtung, falls erwünscht, in einem großen, für alle praktischen Bedürfnisse ausreichenden, Bereich linear gestaltet werden kann. Solche Aufhängevorrichtungen eignen sich deshalb besonders gut für Limousinen und andere Fahrzeuge, die hohe Komfortansprüche zu erfüllen haben.

## Patentansprüche

1. Aufhängevorrichtung für eine schwingende Last (L), insbes. für eine Abgasanlage eines Kraftfahrzeugs, mit
- einem Tragbereich (10), an dem die Aufhängevorrichtung mit einer Tragkonstruktion zu verbinden ist,
- einem biegbaren Lastbalken (20), der im wesentlichen aus Elastomerwerkstoff besteht, zwischen zwei Gelenkzonen (28) angeordnet ist und ein mittig angeordnetes Lastverteilzentrum (22) hat, an dem sich die mittig auf ihn einwirkende Last (L) zu den beiden Gelenkzonen (28) hin verzweigt,
- zwei Tragschenkeln (30), die je eine dieser Gelenkzonen (28) mit dem Tragbereich (10) verbinden, und
- einer biegeweichen, jedoch im wesentlichen zugstarren Einlage (32), die sich längs einer unter Last (L) auf Zug beanspruchten Zone des Lastbalkens (20) mindestens bis zu den beiden Gelenken (28) erstreckt,
- wobei die beiden Gelenkzonen (28) in einer gemeinsamen, sich quer zur Wirkungsrichtung der Last (L) erstreckenden Transversalebene (B) liegen, in der sie bei wechselnder Last zueinander hin und voneinander weg beweglich sind,
**dadurch gekennzeichnet, daß** das Lastverteilzentrum (22) in unbelastetem Zustand zwischen dem Tragbereich (10) und der Transversalebene (B) angeordnet ist und der Lastbalken (20) bei zunehmender vom Tragbereich (10) weg gerichteter Last (L) einer Strecklage mindestens näherbar ist, in der das Lastverteilzentrum (22) in der Transversalebene (B) liegt.

2. Aufhängevorrichtung nach Anspruch 1,
**dadurch gekennzeichnet, daß** die Einlage (32) an Stützkörpern (14, 26, 34, 36, 46) abgestützt ist, die in den Tragbereich (10) und/oder den Lastbalken (20) und/oder die Tragschenkel (30) eingebettet sind.

3. Aufhängevorrichtung nach Anspruch 1 oder 2,
**dadurch gekennzeichnet, daß** der Tragbereich (10) und die beiden Tragschenkel (30) eine versteifende Blattfeder (38) aufweisen.

4. Aufhängevorrichtung nach einem der Ansprüche 1 bis 3,
**dadurch gekennzeichnet, daß** in den Tragbereich (10) eine Tragplatte (40) eingebettet ist, die mit einer Tragkonstruktion so zu verbinden ist, daß sie sich einem Pendeln des Tragbereichs (10) widersetzt.

5. Aufhängevorrichtung nach einem der Ansprüche 1 bis 3,
**dadurch gekennzeichnet, daß** der Tragbereich (10) ein dem Lastverteilzentrum (22) gegenüberliegendes Kraftangriffszentrum (12) aufweist, an dem die Aufhängevorrichtung pendelnd aufhängbar ist.

6. Aufhängevorrichtung nach Anspruch 5,
**dadurch gekennzeichnet, daß** der Tragbereich (10) einen biegbaren Tragbalken (42) aufweist, der gegensinnig zum Lastbalken (20) abgewinkelt ist (Fig. 13).

7. Aufhängevorrichtung nach einem der Ansprüche 1 bis 6,
**dadurch gekennzeichnet, daß** der Lastbalken (20) durch zwischen dem Lastverteilzentrum (22) und den Gelenkzonen (28) angeordnete Aussparungen (44) in einen in bezug auf den Tragbereich (10) proximalen Teil (20') und einen distalen Teil (20'') unterteilt ist, die beide zum Tragbereich (10) hinweisend pfeilförmig abgewinkelt sind.

8. Aufhängevorrichtung nach einem der Ansprüche 1 bis 7,
**dadurch gekennzeichnet, daß** die Beweglichkeit des Lastbalkens (20) zum Tragbereich (10) hin durch einen an mindestens einem dieser beiden Teile angeordneten Puffer (18) begrenzt ist.

9. Aufhängevorrichtung nach einem der Ansprüche 1 bis 8,
**dadurch gekennzeichnet, daß** die Tragschenkel (30) im wesentlichen starr sind und die sie mit dem Lastbalken (20) verbindenden Gelenkzonen (28) als Buchsen-Bolzen-Verbindungen ausgeführt sind.

10. Aufhängevorrichtung nach einem der Ansprüche 1 bis 8,
**dadurch gekennzeichnet, daß** der Tragbereich (10) und die Tragschenkel (30) mindestens teilweise aus Elastomerwerkstoff bestehen.

## Claims

1. Suspension device for a swinging load (L), in particular for an exhaust system of a motor vehicle, said device comprising
- a carrying region (10), at which the suspension device is to be connected to a carrying structure,
- a flexible load beam (20) which essentially consists of elastomer material, is disposed between two articulating zones (28) and has a centrally disposed centre of load distribution (22) at which the load (L), which acts on the said load beam centrally, branches out towards the two articulating zones (28),
- two carrying legs (30) which each connect one of the said articulating zones (28) to the carrying region (10), and
- an inlay (32) which has low flexural strength but is essentially rigid in respect of tension and which extends along a zone of the load beam (20), which zone is stressed in respect of tension when under load (L), at least as far as the two articulations (28),
- wherein the two articulating zones (28) lie in a common transversal plane (B) which extends transversely to the direction of action of the load (L) and in which they are movable towards and away from one another when the load changes,
**characterised in that** the centre of distribution of load (22) is disposed, in the non-loaded condition, between the carrying region (10) and the transversal plane (B), and the load beam (20) can be at least brought closer, when a load (L) increases and is directed away from the said carrying region (10), to a stretched position in which the centre of distribution of load (22) lies in the transversal plane (B).

2. Suspension device according to claim 1,
**characterised in that** the inlay (32) is supported on supporting bodies (14, 26, 34, 36, 46) which are embedded in the carrying region (10) and/or the load beam (20) and/or the carrying legs (30).

3. Suspension device according to claim 1 or 2,
**characterised in that** the carrying region (10) and the two carrying legs (30) have a stiffening leaf spring (38).

4. Suspension device according to one of claims 1 to 3,
**characterised in that** a carrying plate (40), which is to be connected to a carrying structure in such a way that it resists oscillation of the carrying region (10), is embedded in the carrying region (10).

5. Suspension device according to one of claims 1 to 3,
**characterised in that** the carrying region (10) has a centre of application of force (12) which lies opposite the centre of distribution of load (22) and from which the suspension device can be suspended in an oscillating manner.

6. Suspension device according to claim 5,
**characterised in that** the carrying region (10) has a flexible carrying beam (42) that is angled in the opposite direction to the load beam (20) (figure 13).

7. Suspension device according to one of claims 1 to 6,
**characterised in that** the load beam (20) is subdivided, by openings (44) disposed between the centre of distribution of load (22) and the articulating zones (28), into a part (20') which is proximal with respect to the carrying region (10), and a distal part (20"), both of which parts are angled so as to point towards the said carrying region (10) in an arrow-shaped manner.

8. Suspension device according to one of claims 1 to 7,
**characterised in that** the mobility of the load beam (20) towards the carrying region (10) is limited by a buffer (18) disposed on at least one of the said two parts.

9. Suspension device according to one of claims 1 to 8,
**characterised in that** the carrying legs (30) are essentially rigid and the articulating zones (28) connecting them to the load beam (20) are designed as bush/bolt connections.

10. Suspension device according to one of claims 1 to 8,
**characterised in that** the carrying region (10) and the carrying legs (30) consist, at least partially, of elastomer material.

## Revendications

1. Dispositif de suspension pour une charge oscillante (L), en particulier pour un système d'échappement de véhicule, comprenant
- une zone de support (10) où le dispositif de suspension sera relié à un système de support,
- un élément de structure flexible supportant la charge (20), lequel se compose pour l'essentiel d'un matériau élastomère, est disposé entre deux zones d'articulation (28) et possède dans sa partie médiane un centre de répartition de la charge (22) à partir duquel la charge (L) agissant de manière centrique sur ledit élément de structure se ramifie vers les deux zones d'articulation (28),
- deux branches de support (30) reliant chacune l'une desdites zones d'articulation (28) à la zone de support (10), et
- une pièce intercalaire souple (32), mais toutefois pour l'essentiel rigide en traction, qui s'étend au moins jusqu'aux deux articulations (28) le long d'une zone de l'élément de structure supportant la charge (20) sollicitée par traction sous l'effet de la charge (L),
- les deux zones d'articulation (28) étant situées dans un plan transversal commun (B) qui s'étend perpendiculairement à la direction dans laquelle agit la charge (L) et dans lequel lesdites zones d'articulation se rapprochent et s'éloignent l'une de l'autre en présence d'une charge changeante,
**caractérisé en ce que**, à l'état non chargé, le centre de répartition de la charge (22) est disposé entre la zone de support (10) et le plan transversal (B) et **en ce que** l'élément de structure supportant la charge (20) peut, en présence d'une charge (L) croissante orientée de sorte à s'éloigner de la zone de support (10), pour le moins se rapprocher d'une position d'allongement dans laquelle le centre de répartition de la charge (22) se situe dans le plan transversal (B).

2. Dispositif de suspension selon la revendication 1,
**caractérisé en ce que** la pièce intercalaire (32) est en appui sur des corps d'appui (14, 26, 34, 36, 46), lesquels sont incorporés dans la zone de support (10) et/ou l'élément de structure supportant la charge (20) et/ou les branches de support (30).

3. Dispositif de suspension selon la revendication 1 ou 2,
**caractérisé en ce que** la zone de support (10) et les deux branches de support (30) présentent un ressort à lames (38) rigidifiant.

4. Dispositif de suspension selon l'une des revendications 1 à 3,
**caractérisé en ce qu'**une plaque de support (40) est incorporée dans la zone de support (10), laquelle plaque sera reliée de telle sorte à un système de support qu'elle s'opposera à un mouvement oscillant de la zone de support (10).

5. Dispositif de suspension selon l'une des revendications 1 à 3,
**caractérisé en ce que** la zone de support (10) présente un centre d'application de la force (12) qui est situé à l'opposé du centre de répartition de la charge (22) et permet la suspension oscillante du dispositif de suspension.

6. Dispositif de suspension selon la revendication 5,
**caractérisé en ce que** la zone de support (10) présente un élément de support flexible (42) qui est coudé dans le sens inverse par rapport à l'élément de structure supportant la charge (20) (Fig. 13).

7. Dispositif de suspension selon l'une des revendications 1 à 6,
**caractérisé en ce que** l'élément de structure supportant la charge (20) est divisé par des réservations (44) disposées entre le centre de répartition de la charge (22) et les zones d'articulation (28) en une partie proximale (20') et en une partie distale (20") par rapport à la zone de support (10), lesquelles parties sont toutes les deux coudées en forme de flèche montrant vers la zone de support (10).

8. Dispositif de suspension selon l'une des revendications 1 à 7,
**caractérisé en ce que** la mobilité de l'élément de structure supportant la charge (20) vers la zone de support (10) est limitée par un tampon (18) disposé sur au moins une de ces deux parties.

9. Dispositif de suspension selon l'une des revendications 1 à 8,
**caractérisé en ce que** les branches de support (30) sont pour l'essentiel rigides et **en ce que** les zones d'articulation (28) assurant la liaison entre lesdites branches et l'élément de structure supportant la charge (20) sont réalisées sous forme d'assemblages par douille et par goujon.

10. Dispositif de suspension selon l'une des revendications 1 à 8,
**caractérisé en ce que** la zone de support (10) et les branches de support (30) sont constituées pour le moins partiellement d'un matériau élastomère.
